(19) Europäisches Patentamt

European Patent Office

Office européen des brevets

(11) **EP 1 350 020 B1**

(12) **EUROPÄISCHE PATENTSCHRIFT**

(45) Veröffentlichungstag und Bekanntmachung des Hinweises auf die Patenterteilung:
**12.07.2006 Patentblatt 2006/28**

(21) Anmeldenummer: **01994602.9**

(22) Anmeldetag: **08.12.2001**

(51) Int Cl.:
*F02D 9/10* (2006.01)          *F16K 1/22* (2006.01)

(86) Internationale Anmeldenummer:
**PCT/DE2001/004631**

(87) Internationale Veröffentlichungsnummer:
**WO 2002/053895 (11.07.2002 Gazette 2002/28)**

(54) **KLAPPENVENTIL**

FLAP VALVE

SOUPAPE A CLAPET

(84) Benannte Vertragsstaaten:
**DE FR GB IT**

(30) Priorität: **03.01.2001 DE 10100158**

(43) Veröffentlichungstag der Anmeldung:
**08.10.2003 Patentblatt 2003/41**

(73) Patentinhaber: **ROBERT BOSCH GMBH**
**70442 Stuttgart (DE)**

(72) Erfinder:
• **KRIMMER, Erwin**
**73655 Pluederhausen (DE)**
• **KRAUSE, Ralph**
**71334 Waiblingen (DE)**
• **BAUR, Peter**
**71334 Waiblingen (DE)**
• **LORENZ, Christian**
**73434 Aalen-Unterrombach (DE)**
• **KAISER, Klaus**
**71706 Markgroeningen (DE)**

(56) Entgegenhaltungen:
**DE-A- 4 116 636          DE-A- 19 934 113**
**DE-B- 1 297 426          GB-A- 759 111**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 350 020 B1

## Beschreibung

Stand der Technik

Die Erfindung geht aus von einem Klappenventil zum Steuern eines Gasstroms nach dem Oberbegriff des Anspruchs 1, wie es z.B. in DE-A-4 116 636 offenbart ist.

Bei einer bekannten Anordnung einer Drosselklappe in einem Abgaskanal einer Brennkraftmaschine (DE 43 05 123 A1) ist die die Drosselklappe tragende Klappenwelle, die sich parallel zur Klappenebene erstreckt, beiderseits durch eine Lagerbohrung in der Kanalwand des Abgaskanals geführt und ragt dort jeweils durch eine Lagerhülse hindurch. Zur Erzielung einer größeren Dichtigkeit bei Vermeidung einer Schwergängigkeit der Klappenbetätigung sind die durch Federkraft in jeweils einem Lagergehäuse axial vorgespannten Lagerhülsen innerhalb der Lagergehäuse radial verschieblich, wodurch Maßabweichungen zwischen an der Kanalwand ausgebildeten Anschlagflächen für die Drosselklappe und der Klappenwellenlagerung beim ersten Schließen der Drosselklappe selbsttätig kompensiert werden.

In der nichtvorveröffentlichten DE 199 34 113.3 ist es bereits vorgeschlagen worden, ein Klappenventil der eingangs genannten Art als Abgasrückführventil zur dosierten Zumischung von Abgas zu der angesaugten Frischluft im Ansaugtrakt einer Brennkraftmaschine zu verwenden. Hierbei ist im Mantel eines Ansaugrohrs des Ansaugtrakts eine Öffnung vorgesehen, in die das Klappenventil mit seinem Ventilauslaß gasdicht eingesetzt ist. Die Ventilklappe ist mit zur Klappenebene schräg angestellter Klappenwelle zur Klappenverstellung in einem Dünnwandrohr angeordnet, das mit radialem Spiel in dem steifen Ventilrohr einliegt und mit einem Rohrabschnitt an dem Ventilrohr befestigt ist. Durch entsprechende Formgestaltung der Ventilklappe schmiegt sich die Ventilklappe in ihrer Schließstellung an die Innenwand des elastischen Dünnwandrohrs an und schließt den Rohrquerschnitt gasdicht ab, so daß auf eine separate Dichtung zwischen Ventilrohr und Ventilklappe verzichtet werden kann.

Vorteile der Erfindung

Das erfindungsgemäße Klappenventil mit den Merkmalen des Anspruchs 1 hat den Vorteil, daß Ventilrohr und Dünnwandrohr fertigungstechnisch kostengünstig herstellbar sind, insbesondere wenn sie gemäß einer vorteilhaften Ausführungsform der Erfindung aus Kunststoff gespritzt werden. Durch die Spritztechnologie ist es dabei problemlos möglich, die Wandstärke und die Rohrlänge des einstückig angeformten Dünnwandrohrs zu variieren und damit die für die Dichtheit des Klappenventils erforderliche Elastizität des Dünnwandrohrs auf dessen Rohrdurchmesser abzustimmen. Das elastische Dünnwandrohr schmiegt sich im Schließzustand der Ventilklappe dichtend an letztere an, so daß ohne großen Fertigungsaufwand und ohne hohe Anforderungen an die Fertigungsgenauigkeit hohe Dichtheitsanforderungen, wie sie z.B. bei Regelklappen für Verbrennungsmotoren, insbesondere bei einer Drosselklappe für einen Saugmotor, bestehen, sehr gut erfüllt werden. Durch die Schrägstellung der Klappenwelle gegenüber der Ebene der fest mit ihr verbundenen Ventilklappe liegen einerseits notwendige Durchführungen der Klappenwelle im Ventilrohr außerhalb des Dünnwandrohrs so daß sich im Schließbereich keine kritischen Abdichtungsprobleme ergeben, und wird andererseits eine größere Feinfühligkeit in der Einstellung des Klappenventils erreicht, da der erforderliche Drehwinkelbereich der Klappenwelle zwischen Schließ- und maximaler Offenstellung der Ventilklappe sich vergrößert, und zwar mit größer werdendem Anstellwinkel zunehmend.

Durch die in den weiteren Ansprüchen aufgeführten Maßnahmen sind vorteilhafte Weiterbildungen und Verbesserungen des im Anspruch 1 angegebenen Klappenventils möglich.

Gemäß einer vorteilhaften Ausführungsform der Erfindung ist an einem Rohrende des Ventilrohrs ein Anschlußkragen ausgebildet, der das Dünnwandrohr mit radialem Abstand umschließt und über das freie Ende des Dünnwandrohrs axial vorsteht. Durch diese konstruktive Maßnahme ist einerseits eine einfache Integration des elastischen Dünnwandrohrs in das Ventilrohr möglich und andererseits eine leichte Entformbarkeit des Ventilrohrs beim Spritzvorgang gewährleistet. Vorzugsweise sind dabei die Innendurchmesser von Ventilrohr und Dünnwandrohr gleich ausgebildet, während der Anschlußkragen einen gegenüber dem Außendurchmesser des Dünnwandrohrs größeren Innendurchmesser aufweist.

In einer bevorzugten Ausführungsform der Erfindung dient das Klappenventil zum Steuern der Zuluft im Ansaugtrakt einer Brennkraftmaschine, wobei die Ventilklappe die von einem Drehantrieb betätigte Drosselklappe bildet und das Ventilrohr als sog. Drosselklappenstutzen in dem Drosselklappengehäuse integriert ist. Durch das Anstellen der Achse der Klappenwelle gegenüber der Ventil- bzw. Drosselklappenebene werden Abdichtungsprobleme behoben, die bei herkömmlichen Drosselklappenstellern durch die Durchführung der Klappenwelle im Drosselklappenstutzen entstehen; denn bei dem erfindungsgemäßen Klappenventil durchstößt infolge der Schrägstellung der Klappenwelle diese zwar das Ventilrohr bzw. den Drosselklappenstutzen, nicht aber das für die Dichtheit des Klappenventils sorgende Dünnwandrohr. Die Durchführung im Ventilrohr bzw. im Drosselklappenstutzen kann problemlos abgedichtet werden. Zudem wird durch die winkelige Anordnung der Klappenwelle zur Ebene der Drosselklappe die Kleinmengendosierung nahe dem Schließbereich der Drosselklappe wesentlich verbessert, so daß im Leerlaufbereich der Brennkraftmaschine bei gleicher Getriebeübersetzung des Drehantriebs eine besonders feinfühlige Steuerbarkeit der Drosselklappe und damit der Zuluftmenge erreicht wird.

Zeichnung

Die Erfindung ist anhand eines in der Zeichnung dargestellten Ausführungsbeispiels in der nachfolgenden Beschreibung näher erläutert. Es zeigen:

Fig. 1    eine Seitenansicht einer Drosselklappenstelleinheit für eine Brennkraftmaschine,

Fig. 2    einen Schnitt längs der Linie II - II in Fig. 1,

Fig. 3    ein Diagramm der relativen Flächenabdeckung eines von der Drosselklappe gesteuerten Rohrquerschnitts in Abhängigkeit von deren Drehwinkel.

Beschreibung des Ausführungsbeispiels

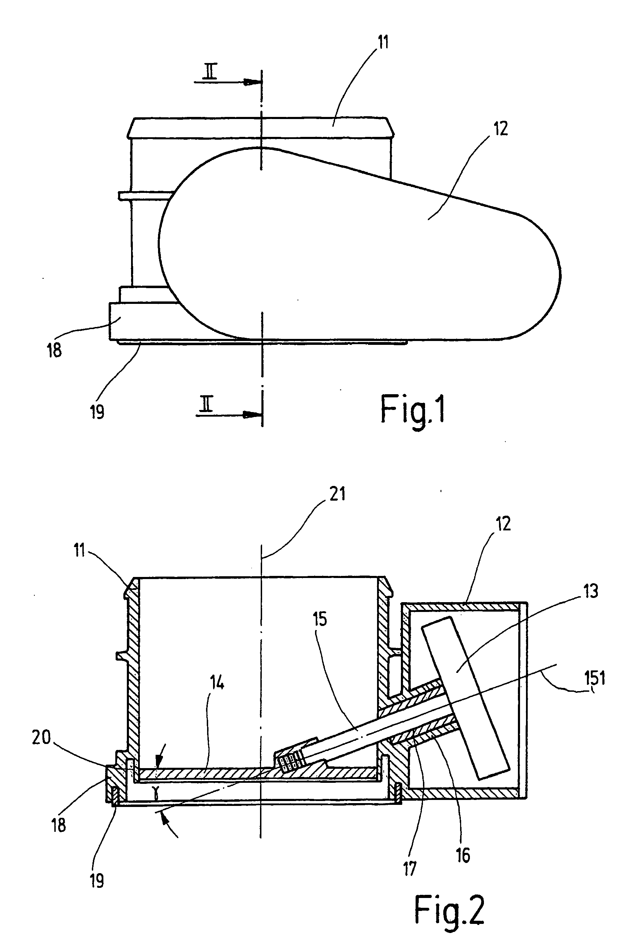

Die in Fig. 1 in Seitenansicht und in Fig. 2 im Schnitt dargestellte Drosselklappenstelleinheit als spezielles Ausführungsbeispiel für ein allgemeines Klappenventil dient zum Steuern der Zuluft einer Brennkraftmaschine. Sie weist ein als Drosselklappenstutzen bezeichnetes Ventilrohr 11, das in eine Ansaugleitung des Ansaugtrakts der Brennkraftmaschine eingesetzt wird, sowie ein mit dem Ventilrohr 11 verbundenes Antriebsgehäuse 12 auf, in dem ein Drehantrieb 13 zum Verstellen einer im Ventilrohr 11 angeordneten Ventil- oder Drosselklappe 14 angeordnet ist. Die Drosselklappe 14 ist drehfest mit einer Klappenwelle 15 verbunden, wobei die Klappenwelle 15 gegenüber der Klappenebene oder Klappenfläche unter einem spitzen Winkel angestellt ist, die Achse 151 der Klappenwelle 15 mit der Klappenebene also den spitzen Winkel γ einschließt (Fig. 2). Die Klappenwelle 15 ist durch eine die Wand des Ventilrohrs 11 und des Antriebsgehäuses 12 durchstoßende Durchführung 16 mittels eines Gleitlagers 17 drehbar gelagert. Am freien Ende der Klappenwelle 15 greift der Drehantrieb 13 an, der beispielsweise als Elektromotor mit Übersetzungsgetriebe ausgeführt sein kann. Wie Fig. 2 zeigt, ist das steife Ventilrohr 11 an seinem Rohrende mit einem Anschlußkragen 18 versehen, der radial nach außen versetzt ist und in einer stirnseitig eingebrachten Ringnut einen Dichtungsring 19 aufnimmt. Der Anschlußkragen 18 ist einstückig mit dem Ventilrohr 11 ausgeführt.

Im Bereich des Übergangs von Ventilrohr 11 und Anschlußkragen 18 ist ein kurzes, flexibles Dünnwandrohr 20 unmittelbar an das Ventilrohr 11, und zwar einstückig mit diesem, angeformt. Dieses Dünnwandrohr 20 weist den gleichen lichten Durchmesser wie das Ventilrohr 11 auf und wird von dem Anschlußkragen 18, der einem gegenüber dem Außendurchmesser des Dünnwandrohrs 20 größeren Innendurchmesser besitzt, mit radialem Abstand umschlossen, wobei der Anschlußkragen 18 noch über das freie Ende des Dünnwandrohrs 20 axial vorsteht. Die Wandstärke und die axiale Länge des Dünnwandrohrs 20 sind so auf den Rohrdurchmesser des Dünnwandrohrs 20 abgestimmt, daß das Dünnwandrohr 20 eine ausreichende Elastizität aufweist, um von der Drosselklappe 14 in Grenzen verformt werden zu können. Das Ventilrohr 11 mit Dünnwandrohr 20 wird vorzugsweise aus Kunststoff im Spritzverfahren gefertigt. Die Herstellung aus Metall ist ebenfalls möglich.

Die kreisrunde Drosselklappe 14 hat einen Außendurchmesser, der gleich dem Innendurchmesser des Dünnwandrohrs 20 ist. Vorzugsweise hat der Außendurchmesser der Drosselklappe 14 ein geringes Übermaß gegenüber dem Innendurchmesser des Dünnwandrohrs 20. In der in Fig. 2 dargestellten Schließstellung der Drosselklappe 14 schmiegt sich dadurch das elastische Dünnwandrohr 20 mit seiner Innenwand völlig gasdicht an die Außenkontur der kreisrunden Drosselklappe 14 an. In der Schließstellung der Drosselklappe 14 fluchtet die Flächennormale der Drosselklappe 14 mit der Achse 21 von Ventilrohr 11 und Dünnwandrohr 20 oder schließt je nach Größe des Übermaßes der Drosselklappe 14 einen kleinen spitzen Winkel mit der Achse 21 ein.

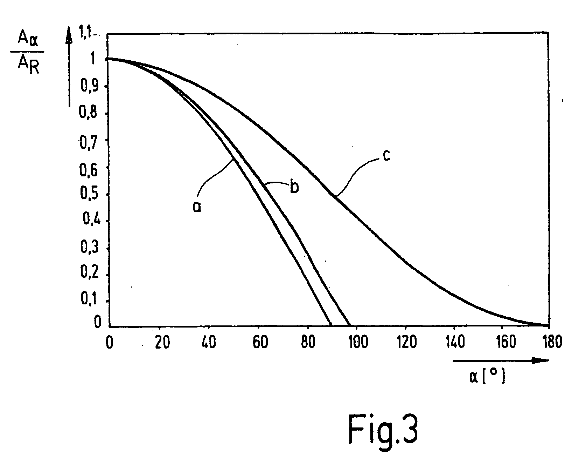

Durch die winkelige Anstellung der Klappenwelle 15 zur Drosselklappe 14 wird die Kleinmengendosierbarkeit der Drosselklappenstelleinheit im Bereich fast geschlossener Drosselklappe 14 verbessert, so daß im Leerlaufbereich der Brennkraftmaschine eine sehr feinfühlige Steuerbarkeit der Drosselklappenstelleinheit erzielt wird. Zur Verdeutlichung ist in Fig. 3 die relative Flächenabdeckung der Drosselklappe 14 als Funktion ihres Drehwinkels α dargestellt. Die relative Flächenabdeckung ergibt sich dabei aus dem Verhältnis von auf den Rohrquerschnitt projizierter Klappenfläche $A_\alpha$ zum Rohrquerschnitt oder zur lichten Rohrfläche $A_R$ des Dünnwandrohrs 20. Diese relative Flächenabdeckung ist abhängig von dem Anstellwinkel γ der Klappenwelle 15 gegenüber der Drosselklappe 14, der bei der Kurve a 0°, bei der Kurve b 20° und bei der Kurve c 45° beträgt. Deutlich ist zu sehen, daß in unmittelbarer Nähe des Schließbereichs ($A_\alpha/A_R=1$) der Drosselklappe 14 bei der Kurve c größere Drehwinkel α an der Drosselklappe 14 eingestellt werden müssen, um eine gleiche Öffnung des Rohrquerschnitts wie bei der Kurve a zu erhalten. Die Kurve a entspricht dabei einer herkömmlichen Verbindung von Klappenwelle 15 und Drosselklappe 14, bei der die Klappenwelle 15 parallel zur Klappenfläche ausgerichtet ist.

Die Kurven a, b und c im Diagramm der Fig. 3 genügen der allgemeinen Funktion

$$\frac{A_\alpha}{A_R} = \cos\alpha \cdot \cos^2\gamma + \sin^2\gamma.$$

**Patentansprüche**

1. Klappenventil zum Steuern eines Gasstroms, mit einem den Gasstrom führenden Ventilrohr (11) und einer im Ventilrohr (11) angeordneten, zwischen einer Schließ-und Offenstellung schwenkbaren Ventilklappe (14), die auf einer verdrehbaren Klappenwelle (15) drehfest sitzt und einen lichten Querschnitt des Ventilrohrs (11) in ihrer Schließstellung überdeckt und in ihrer Offenstellung maximal freigibt,
wobei die Klappenwelle (15) gegenüber der Ventilklappenebene um einen spitzen Winkel (γ) angestellt ist und ein im Ventilrohr (11) integriertes Dünnwandrohr (20) die Ventilklappe (14) in deren Schließstellung randseitig elastisch umschließt, **dadurch gekennzeichnet, daß** das Dünnwandrohr (20) unmittelbar an das Ventilrohr (11), mit diesem einstückig, angeformt ist.

2. Klappenventil nach Anspruch 1, **dadurch gekennzeichnet, daß** an einem Rohrende des Ventilrohrs (11) ein Anschlußkragen (18) ausgebildet ist, der das Dünnwandrohr (20) mit radialem Abstand umschließt und über das freie Ende des Dünnwandrohrs (20) axial vorsteht.

3. Klappenventil nach Anspruch 2, **dadurch gekennzeichnet, daß** die Innendurchmesser von Ventilrohr (11) und Dünnwandrohr (20) gleich groß bemessen sind und daß der Anschlußkragen (18) einen gegenüber dem Außendurchmesser des Dünnwandrohrs größeren Innendurchmesser aufweist.

4. Klappenventil nach einem der Ansprüche 1 - 3, **dadurch gekennzeichnet, daß** Wandstärke und axiale Länge des Dünnwandrohrs (20) so auf den Rohrdurchmesser abgestimmt sind, daß das Dünnwandrohr (20) eine für eine geringe Verformbarkeit ausreichende Elastizität aufweist.

5. Klappenventil nach einem der Ansprüche 1 - 4, **dadurch gekennzeichnet, daß** Ventilrohr (11) und Dünnwandrohr (20) aus Kunststoff gefertigt sind.

6. Klappenventil nach einem der Ansprüche 1 - 5, **dadurch gekennzeichnet, daß** das Dünnwandrohr (20) einen kreisrunden lichten Querschnitt und die kreisrunde Ventilklappe (14) einen gegenüber dem lichten Durchmesser des Dünnwandrohrs (20) gleichen oder mit geringem Übermaß wenig größeren Außendurchmesser aufweist.

7. Klappenventil nach Anspruch 6, **dadurch gekennzeichnet, daß** die Ventilklappe (14) im Ventilrohr (11) so angeordnet ist, daß in ihrer Schließstellung die Flächennormale der Ventilklappe (14) mit der Rohrachse (21) des Dünnwandrohrs (20) fluchtet oder einen sehr kleinen spitzen Winkel mit dieser einschließt.

8. Klappenventil nach einem der Ansprüche 1 - 7, **dadurch gekennzeichnet, daß** die Klappenwelle (15) im Ventilrohr (11) drehbar gelagert ist.

9. Klappenventil nach einem der Ansprüche 1 - 8, **gekennzeichnet durch** seine Verwendung zum Steuern der Zuluft einer Brennkraftmaschine, indem das Ventilrohr (11) mit integriertem Dünnwandrohr (20) einen zum Einsetzen in einen Ansaugtrakt der Brennkraftmaschine angepaßten Drosselklappenstutzen und die Ventilklappe eine Drosselklappe (14) bildet.

**Claims**

1. Flap valve for controlling a gas stream, with a valve tube (11) guiding the gas stream and with a valve flap (14) which is arranged in the valve tube (11) and is pivotable between a closing position and an open position and which is seated fixedly in terms of rotation on a rotatable flap shaft (15) and in its closing position covers a clear cross section of the valve tube (11) and in its open position releases to a maximum the said clear cross section, the flap shaft (15) being set at an acute angle (γ) with respect to the valve-flap plane, and a thin-walled tube (20) integrated in the valve tube (11) elastically surrounding the valve flap (14) in its closing position at the edge, **characterized in that** the thin-walled tube (20) is integrally formed directly onto the valve tube (11), in one piece with the latter.

2. Flap valve according to Claim 1, **characterized in that**, at one tube end of the valve tube (11), a connecting collar (18) is formed, which surrounds the thin-walled tube (20) with a radial clearance and which projects axially beyond the free end of the thin-walled tube (20).

3. Flap valve according to Claim 2, **characterized in that** the inside diameters of the valve tube (11) and of the thin-walled tube (20) are of identical dimension, and **in that** the connecting collar (18) has a larger inside diameter than the outside diameter of the thin-walled tube.

4. Flap valve according to one of Claims 1-3, **characterized in that** the wall thickness and the axial length of the thin-walled tube (20) are coordinated with the tube diameter such that the thin-walled tube (20) has an elasticity sufficient for slight deformability.

5. Flap valve according to one of Claims 1-4 **characterized in that** the valve tube (11) and the thin-walled tube (20) are manufactured from plastic.

6. Flap valve according to one of Claims 1-5, **characterized in that** the thin-walled tube (20) has a circular clear cross section, and the circular valve flap (14) has an outside diameter identical to or, with a slight oversize, a little larger than the clear diameter of the thin-walled tube (20).

7. Flap valve according to Claim 6, **characterized in that** the valve flap (14) is arranged in the valve tube (11) such that, in its closing position, the perpendicular to the surface of the valve flap (14) is in alignment with the tube axis (21) of the thin-walled tube (20) or forms a very small acute angle to the said tube axis.

8. Flap valve according to one of Claims 1-7, **characterized in that** the flap shaft (15) is mounted rotatably in the valve tube (11).

9. Flap valve according to one of Claims 1-8, **characterized by** its use for controlling the supply air of an internal combustion engine, in that the valve tube (11), together with the integrated thin-walled tube (20), forms a throttle-flap assembly adapted for insertion into an intake tract of the internal combustion engine and the valve flap forms a throttle flap (14).

**Revendications**

1. Soupape à clapet destinée à commander un flux gazeux, comportant un tube de soupape (11) conduisant le flux gazeux et logeant un clapet de soupape (14) pivotant entre une position de fermeture et une position d'ouverture, et solidaire en rotation sur un arbre de soupape (15) et qui dans sa position de fermeture recouvre une section transversale intérieure du tube de soupape (11) et dans sa position d'ouverture la libère au maximum, l'arbre de soupape (15) faisant un angle aigu (γ) avec le clapet de soupape, alors qu'un tube de paroi mince (20) intégré dans le tube de soupape (11) entoure le clapet de soupape (14) dans la position de fermeture du tube de soupape de manière élastique du côté du bord,
**caractérisé en ce que**
le tube de paroi mince (20) est rapporté par moulage directement au tube de soupape (11) d'une seule pièce avec celui-ci.

2. Soupape à clapet selon la revendication 1,
**caractérisée en ce qu'**
à une extrémité tubulaire du tube de soupape (11) un collier de raccordement (18) entoure le tube de paroi mince (20) à une distance radiale et fait saillie axialement sur l'extrémité libre du tube de paroi mince (20).

3. Soupape à clapet selon la revendication 2,
**caractérisée en ce que**
les diamètres intérieurs du tube de soupape (11) et du tube de paroi mince (20) ont la même dimension et, le collier de raccordement (18) présente un diamètre intérieur plus grand que le diamètre extérieur du tube de paroi mince.

**4.** Soupape à clapet selon l'une quelconque des revendications 1 à 3,
**caractérisée en ce que**
l'épaisseur de paroi et la longueur axiale du tube de paroi mince (20) sont adaptées au diamètre tubulaire de sorte que le tube de paroi mince (20) présente une élasticité suffisante pour une faible ductilité.

**5.** Soupape à clapet selon l'une quelconque des revendications 1 à 4,
**caractérisée en ce que**
le tube de soupape (11) et le tube de paroi mince (20) sont fabriqués en matière plastique.

**6.** Soupape à clapet selon l'une quelconque des revendications 1 à 5,
**caractérisée en ce que**
le tube de paroi mince (20) présente une coupe transversale intérieure circulaire, et le clapet de soupape circulaire (14) a un diamètre extérieur identique ou légèrement supérieur avec une légère surmesure au diamètre intérieur du tube de paroi mince (20).

**7.** Soupape à clapet selon la revendication 6,
**caractérisée en ce que**
le clapet de soupape (14) est monté dans le tube de soupape (11) pour que dans sa position de fermeture, la normale à la surface du clapet de soupape (14) soit alignée avec l'axe tubulaire (21) du tube de paroi mince (20) ou fasse avec celui-ci un très petit angle aigu.

**8.** Soupape à clapet selon l'une quelconque des revendications 1 à 7,
**caractérisée en ce que**
l'arbre de soupape (15) tourne dans le tube de soupape (11).

**9.** Soupape à clapet selon l'une quelconque des revendications 1 à 8,
**caractérisée par**
son utilisation pour commander l'air frais d'un moteur à combustion interne, tandis que le tube de soupape (11) forme avec le tube de paroi mince intégré (20) une conduite de papillon des gaz adaptée à un montage dans un module d'admission du moteur à combustion interne et le clapet de soupape un volet d'étranglement (14).

Fig.1

Fig.2

7

Fig.3